# EUROPÄISCHE PATENTSCHRIFT

(11) **EP 0 435 301 B1**
(45) Veröffentlichungstag und Bekanntmachung des Hinweises auf die Patenterteilung: **21.12.1994**
(21) Anmeldenummer: 90125615.6
(22) Anmeldetag: 28.12.1990
(51) Int. Cl.: A24C 5/24, C09J 103/08

(54) **Verfahren zur Herstellung von Zigarettennahtleim**
Process for the preparation of an adhesif for the seams of cigarettes
Procédé pour la fabrication d'une colle pour les bords des cigarettes

(30) Priorität: 29.12.1989 DD 336740
(43) Veröffentlichungstag der Anmeldung: 03.07.1991
(73) Patentinhaber: VEREINIGTE ZIGARETTENFABRIKEN DRESDEN GmbH, D-01277 Dresden (DE)
(72) Erfinder: Metzger, Rolfjürgen, O-8021 Dresden (DE); Drabner, Manfred, O-8046 Dresden (DE); Kade, Eberhard, O-8036 Dresden (DE); Grabein, Peter, O-8500 Bischofswerda (DE); Zscheile, Helmut, O-8021 Dresden (DE)
(74) Vertreter: Abitz, Walter, Dr.-Ing.

(56) Entgegenhaltungen:
- DE-A- 2 340 726
- DE-A- 3 914 556
- US-A- 2 606 521

## Beschreibung

Die Erfindung betrifft ein Verfahren zur Herstellung eines Zigarettennahtleims auf der Basis chemisch modifizierter Stärke.

Wässrige Klebstoffmischungen auf der Basis modifizierter Stärke (CMS-Leim), wie sie in der DDR-Patentanmeldung WPC 09J/31780 bzw. der entsprechenden DE-A-3 914 556.5 beschrieben werden, deren gesamter Offenbarungsgehalt hier mitumfaßt sein soll, können in der Zigarettenindustrie zur Verleimung von Zigarettenpapier bei der industriellen Zigarettenfertigung bei einer Stranggeschwindigkeit von maximal 550 m/min mit Erfolg eingesetzt werden.

Die wesentlichen Vorteile der genannten Leimart gegenüber herkömmlichem Leim liegen in der hohen Klebkraft bei kurzer Trocknungszeit, der Verarbeitungsmöglichkeit der Feststoffanteile mit kaltem Wasser und der gesundheitlichen Unbedenklichkeit des Leims.

Die Herstellung des CMS-Leimes nach dem in der erwähnten DDR-Anmeldung beschriebenen Verfahren, bei dem Feststoff und kaltes Wasser möglichst intensiv miteinander vermischt und die wässrige Klebstoffmischung möglichst luftblasenfrei in den Maschinenvorratsbehälter (Leimpatrone) abgefüllt werden sollen, ist für die Praxis der industriellen Zigarettenfertigung nicht zufriedenstellend.

Der für eine ausreichende Klebkraft notwendige Feststoffanteil von ca. 20 % liefert bei einer mittleren praxisgerechten Scherbeanspruchung nach einem intensiven Mischprozeß eine Viskosität, die oberhalb der Fließgrenze bei einem Schergefälle von γ = 1,63 bei η ∼ 500 Pa.s liegt. Ausgehend von dem genannten negativen Fließverhalten ist damit die Leimherstellung mit vertretbaren technischem Aufwand nicht zu automatisieren. Trotz intensivster Vermischung sind in der wässrigen Klebstoffmischung Trockenagglomerate homogen verteilt, die in der Praxis eine Nachquellzeit von 10 bis 54 h erfordern. Diese genannten Nachquellzeiten sind unbedingt erforderlich, um einen Abriß des Leimfilmes an der Zigarettenpapiernaht während der Produktion mit Sicherheit auszuschließen. Trotz eines Ausgleichsprozesses von 54 h sind Schwankungen in der Verteilung der Viskosität von Δη = 7 % festzustellen.

Das wiederum bedeutet, daß das beschriebene Verfahren zur Leimherstellung nur diskontinuierlich realisierbar ist.

Sowohl beim Mischprozeß als auch bei dem nach dem erfolgten Ausquellen des Leimes sich anschließenden Füllvorgang der Patrone per Hand sind bei den vorliegenden Viskositäten störende Lufteinschlüsse nicht zu vermeiden. Eine damit notwendige Evakuierung der gefüllten Leimpatrone bis zu einem Endruck von p = 50 Torr bringt zwar eine Senkung der Lufteinschlüsse, eine völlige Vermeidung der an der Leimscheibe der Zigarettenmaschine störenden Luftblasen ist aufgrund der vom Material vorgegebenen Viskositäten und Diffusionsverhältnisse nicht möglich.

Aufgabe der Erfindung ist die Bereitstellung eines Verfahrens, mit dem eine kontinuierliche Herstellung eines praktisch luftblasenfreien wässrigen Zigarettennahtleimes auf der Basis chemisch modifizierter Stärke ermöglicht wird, und bei dem auf eine Nachbehandlung des Leimes (Patronenevakuierung und dergleichen) verzichtet werden kann.

Erfindungsgemäß wird die Aufgabe dadurch gelöst, daß nach dem Zusammenführen von Feststoff und kaltem Wasser (T = 10 bis 20°C) jedem Mischprozeß ein Zerkleinerungsprozeß mit Hilfe von Schneidvorrichtungen überlagert bzw. zeitlich nachgeschaltet wird. Die Kombination von Misch- und Zerkleinerungsprozeß bewirkt eine ständige Auflösung der Feststoffagglomerate bei gleichzeitiger Anlagerung von Lösungsmittel am Feststoffteilchen.

Darüber hinaus bewirkt der Wechsel zwischen Misch- und Zerkleinerungsprozeß ein Aufschlagen der sich bildenden Gelstrukturen und ein Auflösen eingeschlossener Luftblasen. Damit ist sichergestellt, daß bei einer Zeit von t ≦ 3 min für Mischen und Zerkleinern ein sofort verarbeitbares Endprodukt zur Verfügung steht. Der praktische Befund zeigt, daß die Viskositäten beim reinen Mischprozeß gegenüber der Kombination aus Misch- und Zerkleinerungsprozeß bei gleicher Rezeptur und Scherbeanspruchung um den Faktor 1,5 höher liegen.

Die damit sichergestellte Fließfähigkeit unter Umgebungsbedingungen gewährleistet einen selbsttätigen Eintrag in die Patronenfülleinrichtung und somit eine zeitlich durchgängige Automatisierung vom Eintrag der Mischungskomponenten in die Misch- und Zerkleinerungsapparatur bis zur Abgabe des fertigen Leimes aus der Leimpatrone.

Damit liegt ein Endprodukt vor, das ausgezeichnete Klebeeigenschaften aufweist, dessen Schwankungen in der Viskositätsverteilung < 1 % betragen und dessen feinverteilte Lufteinlagerungen einen Blasendurchmesser von d < 100 µm aufweisen.

Homogenität, Lufteinschlüsse in Mikrostruktur und vergleichbar niedrige Viskosität des Leimes ermöglichen neben den genannten Vorteilen bei der eigentlichen Herstellung, günstige Bedingungen am Leimapparat der Zigarettenmaschine, wie homogene Belegung der Leimscheibe und Übertragung auf das Zigarettenpapier bei Stranggeschwindigkeiten von 550 m/min und damit eine quantitative und qualitative Stabilisierung der Zigarettenproduktion.

Die wässrige Klebstoffmischung auf Basis chemisch modifizierter Stärke besteht vorzugsweise aus 15 bis 30 Ma-% eines Carboxymethylethers der Kartoffelstärke oder Maisstärke mit einem Substitutionsgrad von 0,1 bis 0,25, wobei ein Teil der Carboxylgruppen der Verbindung mit den Hydroxylgruppen benachbarter Moleküle esterartig verknüpft sind und die freien Carboxylgruppen in Form des Natriumsalzes vorliegen. Vorzugsweise ist das Verhältnis von freien zu veresterten Carboxylatgruppen so gewählt, daß in 2 %-iger wässriger Lösung eine Quasiviskosität von 500 bis 4000 mPa.s vorliegt, bestimmt mit einem Kugelstabviskosimeter nach Höppler bei einer Schubspannung von 4,91 kPa. Der Gesamtgehalt an anorganischen Salzen liegt vorzugsweise unter 2 % und der Gehalt an Schwermetallen und anderen schädlichen Stoffen unterhalb der für Nahrungs- und Genußmittel zulässigen Grenzen.

### Ausführungsbeispiel

Zur Herstellung von Zigarettennahtleim werden bestimmte Mengenanteile an pulverförmiger Carboxymethylstärke und kaltem Wasser (Gesamtsalzgehalt < 1 %; Gesamthärte < 20°dH; Temperatur 20°C) in einem Verhältnis von 1:5 in einen rotierenden Mischbehälter (11 = U/min) dosiert. Im Halbkreisbogenquerschnitt des rotierenden ringförmigen Mischbehälters sind tangential zum Mittelpunkt des Mischbehälters um 120° versetzte, kreisbogenförmige Messer angeordnet, die in einem überlagerten intensiven Zerkleinerungs-Mischprozeß (vorzugsweise 1450 U/min) in einer Zeitspanne von etwa 3 min die Herstellung einer homogenen, gelartigen, praktisch luftblasenfreien Klebstoffmischung gestatten, die keiner Nachbehandlung unterzogen werden muß. Der fertige Leim hat bei einer Temperatur von 28° bis 30°C ein Fließverhalten, das ein automatisches Austragen der Klebstoffmasse aus dem genannten Mischbehälter in eine Förderschnecke und ein praktisch luftblasenfreies Abfüllen in einen entsprechenden Klebstoffaufnahmebehälter (Leimpatrone) gewährleistet.

## Patentansprüche

1. Verfahren zur Herstellung von Zigarettennahtleim auf der Basis chemisch modifizierter Stärke, dadurch gekennzeichnet, daß die festen und flüssigen Komponenten durch eine Überlagerung von oder durch ein zeitliches nacheinander Ablaufen von Mischstufen und mit Hilfe von Schneidvorrichtungen durchgeführten Zerkleinerungsstufen zu einer wäßrigen Klebstoffmasse verarbeitet werden.

2. Verfahren nach Anspruch 1, dadurch gekennzeichnet, daß die Viskosität des wässrigen Klebstoffgemisches bei einem Feststoffanteil von vorzugsweise etwa 20 Gew.-% bei Umgebungsbedingungen unterhalb der Fließgrenze liegt.

3. Verfahren nach den Ansprüchen 1 und 2, dadurch gekennzeichnet, daß die wässrige Klebstoffmischung nach einer Mischzeit von vorzugsweise etwa 3 min bei einer maximalen Umfangsgeschwindigkeit vₘₐₓ von etwa 24,5 m/sec und einer dabei wirkenden Scherfläche von vorzugsweise etwa 900 cm² sofort ohne Nachqellstufe als Zigarettennahtleim eingesetzt wird.

4. Verfahren nach den Ansprüchen 1 bis 3, dadurch gekennzeichnet, daß das Mischen und Zerkleinern derart intensiv durchgeführt wird, daß die Schwankungen in der Verteilung der Viskosität unmittelbar nach Füllung der Leimpatrone weniger als etwa 1 % betragen.

5. Verfahren nach den Ansprüchen 1 bis 4, dadurch gekennzeichnet, daß die Lufteinschlüsse in der wässrigen Klebstoffmischung einen Blasendurchmesser von d < 100 µm aufweisen.

6. Verfahren nach den Ansprüchen 1 bis 5, dadurch gekennzeichnet, daß die Verfahrensschritte der Leimzubereitung des Füllens der Leimpatrone kontinuierlich, ohne Unterbrechnung des Materialflusses durchgeführt werden.

7. Verfahren nach den Ansprüchen 1 bis 6, dadurch gekennzeichnet, daß der Zigarettennahtleim auf Basis chemisch modifizierter Stärke aus 15 bis 30 Ma-% eines Carboxymethylethers der Kartoffelstärke oder Maisstärke mit einem Substitutionsgrad von 0,1 bis 0,25 besteht, wobei ein Teil der Carboxylgruppen der Verbindung mit den Hydroxylgruppen benachbarter Moleküle esterartig verknüpft sind und die freien Carboxylgruppen in Form des Natriumsalzes vorliegen.

8. Verfahren nach Anspruch 7, dadurch gekennzeichnet, daß das Verhältnis von freien zu veresterten Carboxylatgruppen so gewählt ist, daß in 2 %-iger wässriger Lösung eine Quasiviskosität von 500 bis 4000 mPa.s vorliegt, bestimmt mit einem Kugelstabviskosimeter nach Höppler bei einer Schubspannung von 4,91 kPa.

9. Verfahren nach den Ansprüchen 7 und 8, dadurch gekennzeichnet, daß der Gesamtgehalt an anorganischen Salzen vorzugsweise unter 2 % liegt und der Gehalt an Schwermetallen und anderen schädlichen Stoffen unterhalb der für Nahrungs- und Genußmittel zulässigen Grenzen liegt.

## Claims

1. Process for preparing cigarette seam glue on the basis of chemically modified starch, characterized in that the solid and liquid components are processed to an aqueous adhesive composition by an overlapping or by a temporally consecutive run of mixing steps and comminution steps carried out with the aid of cutting devices.

2. Process according to claim 1, characterized in that the viscosity of the aqueous adhesive mixture is below the flow limit under environmental conditions at a solids proportion of preferably about 20% by weight.

3. Process according to claims 1 and 2, characterized in that after a mixing time of preferably about 3 minutes at a maximum peripheral velocity vₘₐₓ of about 24.5 m/sec. and a shear surface acting at the same time of preferably about 900 cm², the aqueous adhesive mixture is used immediately as a cigarette seam glue without subsequent swelling step.

4. Process according to claims 1 to 3, characterized in that the mixing and comminution is carried out to such an intensive extent that the variations in the viscosity distribution immediately after filling the glue cartridge are less than about 1%.

5. Process according to claims 1 to 4, characterized in that the air occlusions in the aqueous adhesive mixture have a bubble diameter of d < 100 µm.

6. Process according to claims 1 to 5, characterized in that the process steps of glue preparation and of filling the glue cartridge are carried out continuously without interrupting the material flow.

7. Process according to claims 1 to 6, characterized in that the cigarette seam glue on the basis of chemically modified starch consists of 15 to 30% by weight of a carboxymethyl ether of potato starch or corn starch with a degree of substitution of 0.1 to 0.25, a part of the carboxyl groups of the compound being linked esterlike with the hydroxyl groups of adjacent molecules and the free carboxyl groups being present in the form of the sodium salt.

8. Process according to claim 7, characterized in that the ratio of free to esterified carboxylate groups is selected such that a quasiviscosity of 500 to 4000 mPa.s is present in 2% aqueous solution as determined with a Höppler ball-and-rod viscosimeter with a shear stress of 4.91 kPa.

9. Process according to claims 7 and 8, characterized in that the total content of inorganic salts is preferably below 2% and the content of heavy metals and other injurious substances is below the limits admissible for foodstuffs and semiluxury goods.

## Revendications

1. Procédé pour la fabrication de colle destinée aux fermetures de cigarettes, à base d'amidon chimiquement modifié caractérisé en ce que les composants solides et liquides sont traités en une étape, ou en une succession d'étapes, de mélange et de broyage, le broyage étant exécuté avec des dispositifs de coupe.

2. Procédé selon la revendication 1, caractérisé en ce que la viscosité du mélange d'eau et de colle se situe, dans des conditions normales, en dessous de la limite de fluidité pour une teneur en matière solide de préférence d'approximativement 20 % en poids.

3. Procédé selon les revendications 1 et 2, caractérisé en ce que le mélange d'eau et de colle peut être utilisé de suite et sans étape de gonflement, comme colle pour les fermetures de cigarettes, après un temps de mélange d'approximativement 3 min, de préférence avec une vitesse circonférentielle maximale Vmax d'approximativement 24,5 m/sec et avec une surface de cisaillement efficace qui est de préférence de 900 cm².

4. Procédé selon les revendications 1 à 3, caractérisé en ce que le mélange et broyage sont effectués avec une telle intensité que les différences dans la répartition de la viscosité immmédiatement après le chargement de la cartouche de colle sont inférieures à environ 1%.

5. Procédé selon les revendications 1 à 4, caractérisé en ce que les inclusions d'air dans le mélange d'eau et de colle ont un diamètre de bulle d < 100 µm.

6. Procédé selon les revendications 1 à 5, caractérisé en ce que les étapes du procédé de préparation de colle et de chargement de la cartouche de colle se font en continu, sans interruption du flux de matière.

7. Procédé selon les revendications 1 à 6, caractérisé en ce que la colle destinée aux fermetures collées de cigarettes à base d'amidon chimiquement modifié est composée de 15 à 30 Ma-% d'un Carboxyméthyléther d'amidon de pomme de terre ou de maïs avec un degré de substitution de 0,1 à 0,25, une partie des groupes Carboxyle du composé sont liés avec les groupes hydroxyle de molécules voisines à la façon d'un ester et les groupes Carboxyle libres se présentent sous la forme de sel de sodium.

8. Procédé selon la revendication 7, caractérisé en ce que la proportion des groupes Carboxylate libres par rapport à ceux qui sont estérifiés est choisie de telle manière que dans une solution aqueuse à 2% il existe une quasi-viscosité de 500 à 4000 mPa, mesurée avec un viscosimètre à tige sphérique de Höppler avec une contrainte au cisaillement de 4,91 kPa.

9. Procédé selon les revendications 7 et 8, caractérisé en ce que la teneur totale en sels minéraux est de préférence en dessous de 2% et en ce que la teneur en métaux lourds et en autres matières nuisibles est en dessous des normes admises pour les aliments et les stimulants.
